# EUROPEAN PATENT SPECIFICATION

(11) **EP 3 095 208 B1**
(45) Date of publication and mention of the grant of the patent: **14.06.2017**
(21) Application number: 15702047.0
(22) Date of filing: 13.01.2015
(51) Int. Cl.: H04L 1/00, H04W 28/06, H04W 84/12, H04W 72/12

(54) **SIGNALING BETWEEN PHY AND MAC LAYERS**
SIGNALISIERUNG ZWISCHEN PHY- UND MAC-SCHICHTEN
SIGNALISATION ENTRE COUCHES PHY ET MAC

(30) Priority: 13.01.2014 US 201461926935 P; 12.01.2015 US 201514594551
(43) Date of publication of application: 23.11.2016
(73) Proprietor: Qualcomm Incorporated, San Diego, CA 92121-1714 (US)
(72) Inventor: ASTERJADHI, Alfred, San Diego, California 92121-1714 (US); JAFARIAN, Amin, San Diego, California 92121-1714 (US); TIAN, Bin, San Diego, California 92121-1714 (US)
(74) Representative: Wegner, Hans
(86) International application number: PCT/US2015/011083
(87) International publication number: WO 2015/106231

(56) References cited:
- WO-A1-2013/192333
- Minyoung Park ET AL: "IEEE P802.11 Wireless LANs. Proposed Specification Framework for TGah. IEEE 802.11-11/1137r11", , 19 September 2012 (2012-09-19), pages 1-36, XP55050431, Retrieved from the Internet: URL:https://mentor.ieee.org/802.11/dcn/12/ /11-11-1137-11-00ah-specification-framewor k-for-tgah.docx [retrieved on 2013-01-21]

## Description

### BACKGROUND

### Field of the Invention

Certain aspects of the present disclosure generally relate to wireless communications and, more particularly, signaling of certain parameters between physical (PHY) and media access control (MAC) layers of a wireless device.

### Relevant Background

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

In order to address the desire for greater coverage and increased communication range, various schemes are being developed. One such scheme is the sub-1-GHz frequency range (e.g., operating in the 902 - 928 MHz range in the United States) being developed by the Institute of Electrical and Electronics Engineers (IEEE) 802.11ah task force. This development is driven by the desire to utilize a frequency range that has greater wireless range than wireless ranges associated with frequency ranges of other IEEE 802.11 technologies and potentially fewer issues associated with path losses due to obstructions.

The document "Proposed Specification Framework for TGah" by Minyoung Park, doc.: IEEE 802.11-11/1137r11 describes the functional blocks of the physical layer and provides information about 11ah single stream pilots in the LTF, SIG and Data fields of short preamble packets.

### SUMMARY

Aspects of the present disclosure provide methods, a computer program and apparatuses as claimed in independent claims 1,5,9,10,13. Preferred embodiments are stipulated in dependent claims.

### BRIEF DESCRIPTION OF THE DRAWINGS

FIG. 1 illustrates a diagram of an example wireless communications network, in accordance with certain aspects of the present disclosure.
Fig. 2 illustrates a block diagram of an example access point and user terminals, in accordance with certain aspects of the present disclosure.
FIG. 3 illustrates a block diagram of an example wireless device, in accordance with certain aspects of the present disclosure.
FIGs. 4 and 4A illustrate an example non-null data packet (non-NDP) frame structure, in accordance with certain aspects of the present disclosure.
FIG. 5 illustrates an example NDP frame structure, in accordance with certain aspects of the present disclosure.
FIG. 5A illustrates a greater than or equal to 2MHz NDP MAC frame, in accordance with certain aspects of the present disclosure.
Fig. 6 illustrates a block diagram of example operations for wireless communications by an apparatus for signaling between a PHY layer and a MAC layer, in accordance with certain aspects of the present disclosure.
FIG. 6A illustrates example means capable of performing the operations shown in FIG. 6.
FIG. 7 illustrates a block diagram of example operations for wireless communications by an apparatus for signaling between a PHY layer and a MAC layer, in accordance with certain aspects of the present disclosure.
FIG. 7A illustrates example means capable of performing the operations shown in FIG. 7.
FIG. 8 illustrates an example system for providing signaling between a PHY layer and a MAC layer, in accordance with certain aspects of the present disclosure.
Fig. 9 illustrates various parameters that may be signaled in a RXVECTOR/TXVECTOR, according to certain aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

In certain wireless systems, computing frame identifiers at the media access control (MAC) layer for control response frames (e.g., null data packet (NDP) acknowledgement (ACK), NDP BlockAck, static ACK (STACK), NDP Modified ACK, etc) use a variety of different types or information generated at the physical (PHY) layer. Currently, however, signaling from the MAC to PHY layers and from the PHY to MAC layers of the information used to generate the frame identifiers is missing. Aspects of the present disclosure provide techniques for signaling between the MAC and PHY layers so that information may be shared between the MAC and PHY layers.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims.

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA) system, Time Division Multiple Access (TDMA) system, Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point (AP) may comprise, be implemented as, or known as a Node B, Radio Network Controller (RNC), evolved Node B (eNB), Base Station Controller (BSC), Base Transceiver Station (BTS), Base Station (BS), Transceiver Function (TF), Radio Router, Radio Transceiver, Basic Service Set (BSS), Extended Service Set (mess), Radio Base Station (RBS), or some other terminology.

An access terminal (AT) may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, an access terminal may comprise a cellular telephone, a cordless telephone, a Session Initiation Protocol (SIP) phone, a wireless local loop (WLL) station, a personal digital assistant (PDA), a handheld device having wireless connection capability, a Station (STA), or some other suitable processing device connected to a wireless modem. Accordingly, one or more aspects taught herein may be incorporated into a phone (e.g., a cellular phone or smart phone), a computer (e.g., a laptop), a tablet, a portable communication device, a portable computing device (e.g., a personal data assistant), an entertainment device (e.g., a music or video device, or a satellite radio), a global positioning system (GPS) device, or any other suitable device that is configured to communicate via a wireless or wired medium.

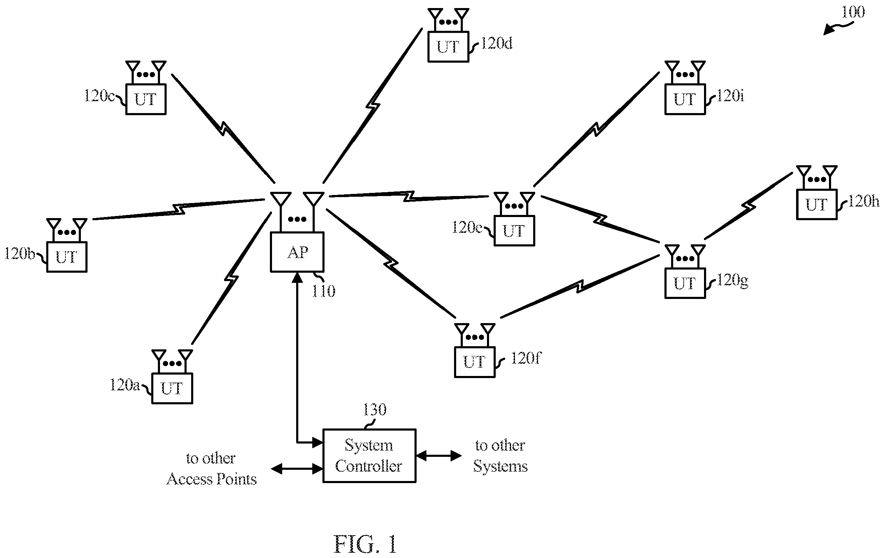

FIG. 1 illustrates a multiple-access multiple-input multiple-output (MIMO) system 100 with access points and user terminals. For simplicity, only one AP 110 is shown in FIG. 1. An access point is generally a fixed station that communicates with the user terminals and may also be referred to as a base station or some other terminology. A user terminal may be fixed or mobile and may also be referred to as a mobile station, a wireless device, or some other terminology. Access point 110 may communicate with one or more user terminals 120 at any given moment on the downlink and uplink. The downlink (i.e., forward link) is the communication link from the access point to the user terminals, and the uplink. (i.e., reverse link) is the communication link from the user terminals to the access point. A user terminal may also communicate peer-to-peer with another user terminal. A system controller 130 couples to and provides coordination and control for the access points.

A system controller 130 may provide coordination and control for these APs and/or other systems. The APs may be managed by the system controller 130, for example, which may handle adjustments to radio frequency power, channels, authentication, and security. The system controller 130 may communicate with the APs via a backhaul. The APs may also communicate with one another, e.g., directly or indirectly via a wireless or wireline backhaul.

While portions of the following disclosure will describe user terminals 120 capable of communicating via Spatial Division Multiple Access (SDMA), for certain aspects, the user terminals 120 may also include some user terminals that do not support SDMA. Thus, for such aspects, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *Nₐₚ* antennas and represents the multiple-input (MI) for downlink transmissions and the multiple-output (MO) for uplink transmissions, A set of *K* selected user terminals 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexed in code, frequency or time by some means. *K* may be greater than *Nₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥ 1). The *K* selected user terminals can have the same or different number of antennas.

The SDMA system may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

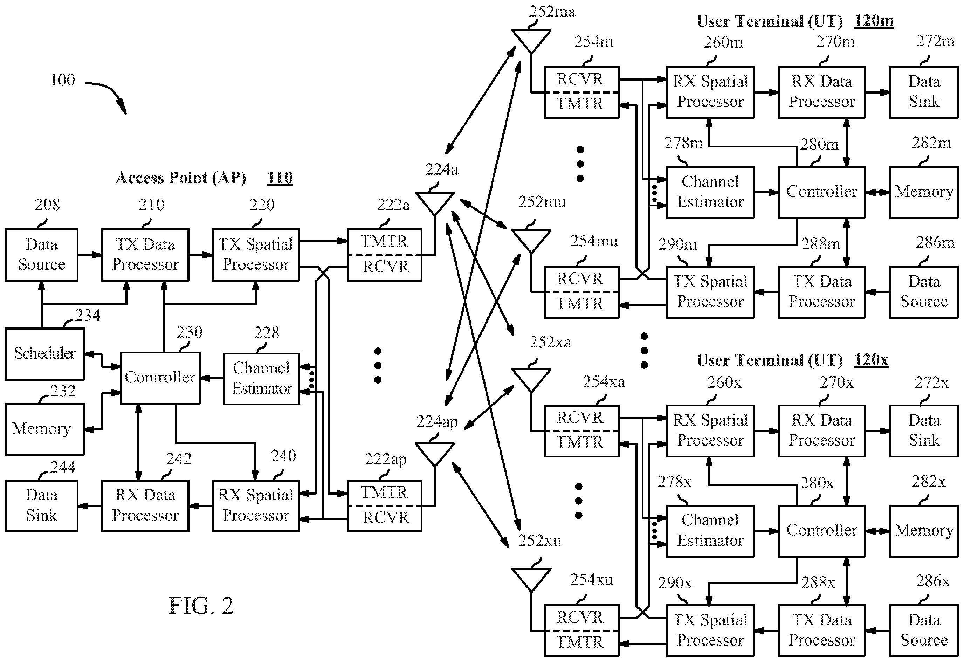

FIG. 2 illustrates a block diagram of access point 110 and two user terminals 120m and 120x in MIMO system 100. The access point 110 is equipped with *Nₜ* antennas 224a through 224ap. User terminal 120m is equipped with *N_{ut,m}* antennas 252ma through 252mu, and user terminal 120x is equipped with *N_{ut,x}* antennas 252xa through 252xu. The access point 110 is a transmitting entity for the downlink and a receiving entity for the uplink. Each user terminal 120 is a transmitting entity for the uplink and a receiving entity for the downlink. As used herein, a ''transmitting entity" is an independently operated apparatus or device capable of transmitting data via a wireless channel, and a "receiving entity" is an independently operated apparatus or device capable of receiving data via a wireless channel. In the following description, the subscript "*dn*" denotes the downlink, the subscript "*up*" denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn}*, and *Nᵤₚ* and *N_{dn}* may be static values or can change for each scheduling interval. The beam-steering or some other spatial processing technique may be used at the access point and user terminal.

On the uplink, at each user terminal 120 selected for uplink transmission, a transmit (TX) data processor 288 receives traffic data from a data source 286 and control data from a controller 280. The controller 280 may be coupled with a memory 282. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N_{ut,m}* transmit symbol streams for the *N_{ut,m}* antennas. Each transmitter unit (TMTR) 254 receives and processes (e.g., converts to analog, amplifies, filters, and frequency up-converts) a respective transmit symbol stream to generate an uplink signal. *N_{ut,m}* transmitter units 254 provide *N_{ut,m}* uplink signals for transmission from *N_{ut,m}* antennas 252 to the access point.

*Nᵤₚ* user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all *Nᵤₚ* user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the *Nₐₚ* received symbol streams from *Nₐₚ* receiver units 222 and provides *Nᵤₚ* recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, de-interleaves, and decodes) each recovered uplink data symbol stream in accordance with the rate used for that stream to obtain decoded data. The decoded data for each user terminal may be provided to a data sink 244 for storage and/or a controller 230 for further processing. The controller 230 may be coupled with a memory 232.

On the downlink, at access point 110, a TX data processor 210 receives traffic data from a data source 208 for *N_{dn}* user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides *N_{dn}* downlink data symbol streams for the *N_{dn}* user terminals. A TX spatial processor 220 performs spatial processing (such as a precoding or beamforming, as described in the present disclosure) on the *N_{dn}* downlink data symbol streams, and provides *Nₐₚ* transmit symbol streams for the *Nₐₚ* antennas. Each transmitter unit 222 receives and processes a respective transmit symbol stream to generate a downlink signal. *Nₐₚ* transmitter units 222 providing *Nₐₚ* downlink signals for transmission from *Nₐₚ* antennas 224 to the user terminals.

At each user terminal 120, *N_{ut,m}* antennas 252 receive the *Nₐₚ* downlink, signals from access point 110. Each receiver unit 254 processes a received signal from an associated antenna 252 and provides a received symbol stream. An RX spatial processor 260 performs receiver spatial processing on *N_{ut,m}* received symbol streams from *N_{ut,m}* receiver units 254 and provides a recovered downlink data symbol stream for the user terminal. The receiver spatial processing is performed in accordance with the CCMI, MMSE or some other technique. An RX data processor 270 processes (e.g., demodulates, de-interleaves and decodes) the recovered downlink data symbol stream to obtain decoded data for the user terminal.

At each user terminal 120, a channel estimator 278 estimates the downlink channel response and provides downlink channel estimates, which may include channel gain estimates, signal-to-noise (SNR) estimates, noise variance and so on. Similarly, at access point 110, a channel estimator 228 estimates the uplink channel response and provides uplink channel estimates. Controller 280 for each user terminal typically derives the spatial filter matrix for the user terminal based on the downlink channel response matrix *H_{dn,m}* for that user terminal. Controller 230 derives the spatial filter matrix for the access point based on the affective uplink channel response matrix *H_{up,eff}.* Controller 280 for each user terminal may send feedback information (e.g., the downlink and/or uplink eigenvectors, eigenvalues, SNR estimates, and so on) to the access point. Controller 230 and 280 also control the operation of various processing units at access point 110 and user terminal 120, respectively.

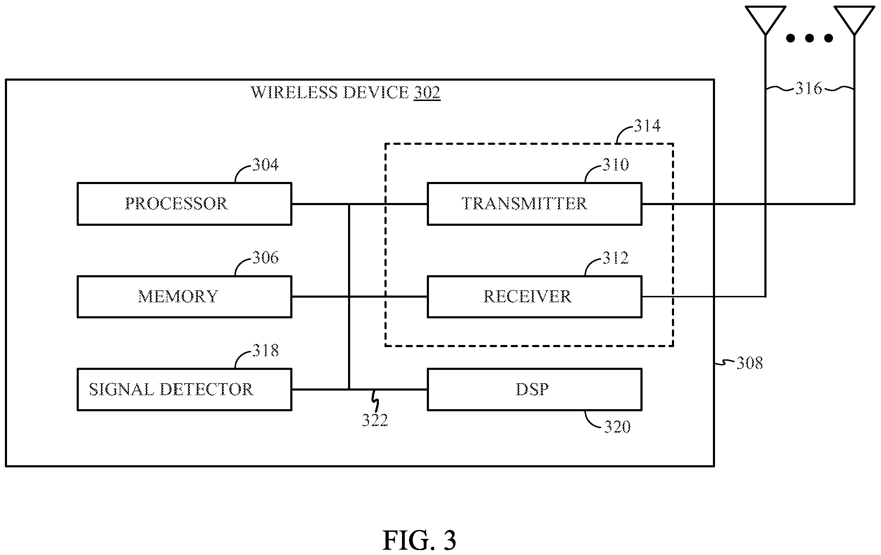

FIG. 3 illustrates various components that may be utilized in a wireless device 302 that may be employed within the MIMO system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote node. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

### EXAMPLE SIGNALING BETWEEN PHY AND MAC LAYERS

As noted above, in certain wireless systems, computing frame identifiers at the media access control (MAC) layer for control response frames use a variety of different types of information generated at the physical (PHY) layer. For example, the Institute of Electrical and Electronic Engineers (IEEE) 802.11ah standard specifies computing frame identifiers for a null data packet (NDP) acknowledgement (ACK), NDP BlockAek, static ACK (STACK), and NDP Modified ACK frames may use Scrambler initialization information, Frame check sequence (FCS) field information, and cyclic redundancy check (CRC) information.

While computation of these frame identifiers may be performed at the MAC layer, the information used to compute the frame identifiers may be generated at the PHY layer. Aspects of the present disclosure provide techniques for signaling between the MAC and PHY layers so that such information may be shared between the MAC and PHY layers.

Aspects of the present disclosure provide means of signaling from MAC to PHY and from PHY to MAC of parameters (e.g., Scrambler initialization information, Frame check sequence (FCS) field information, and CRC information, or any other type of information that may be needed to be signaled between a PHY layer and a MAC layer) so that frame identifier computation may be enabled, as specified by wireless standards, such as 802.11ah.

Aspects of the present disclosure provide for a parameter (e.g., an RXVECTOR parameter SCRAMBLER_OR_CRC) that can be conveyed via PHY to MAC signaling at the receiver of a frame (e.g., a frame eliciting a response frame. The same type of parameter may be conveyed (e.g., in a PHY.TXEND primitive) via PHY signaling at the transmitter of the frame).

Such signaling may allow a higher layer of a protocol stack at a receiver (e.g., at the MAC layer) to obtain the Scrambler or CRC values of the received frame from its PHY layer. Similarly, such signaling may allow a higher layer of a protocol stack at the transmitter to obtain the values generated by its PHY layer for a transmitted frame.

In some cases, this signaling may be provided as a new parameter. In other cases, the signaling may be provided by concatenating information to an existing parameter, for example, in one or both of the RXVECTOR and PHY.TXEND primitive. In either case, the information conveyed by this signaling may be used to obtain the value of the FCS field of the frame, which may be used by the MAC for computation of other quantities in IEEE 802.11ah, such as Short Beacon frames and Short Probe Responses. In some cases, the information may be conveyed in either the PHY.RXEND or PHY.TXEND primitive.

According to certain aspects, the signaling of the Scrambler initialization value or CRC value may be conveyed via a parameter referred to herein as SCRAMBLER_OR_CRC, which may be conveyed in a PHY.TXEND.confirm primitive (a mechanism used to indicate the end of a PLCP Protocol Data Unit (PPDU) transmission). The SCRAMBLER_OR_CRC parameter may be present if a packet indicates capability to support sub 1GHz "S1G" signaling (e.g., as indicated with a flag dot11S1GOptionImplemented is true). The actual SCRAMBLER_OR_CRC parameter value, and its meaning, may depend on the type of the transmitted frame.

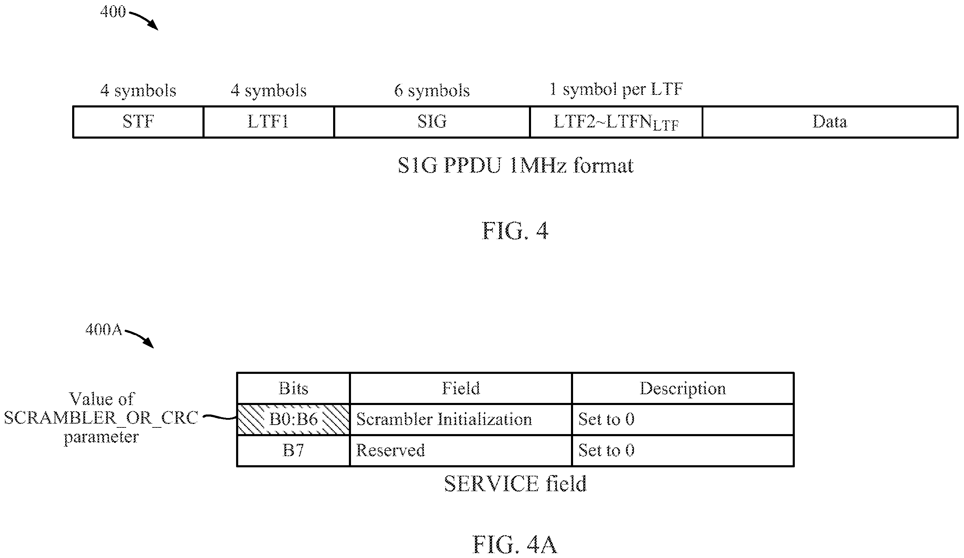

As an example, for a non-null data packet (non-NDP) frame 400 as illustrated in FIG. 4, the value of the SCRAMBLER_OR_CRC parameter may be the Scrambler Initialization value in the Service field after scrambling. As illustrated, the SCRAMBLER_OR_CRC parameter may be the value in bits B0:B6 of the Service field, illustrated in FIG. 4A, of the Data field of the non-NDP frame 400.

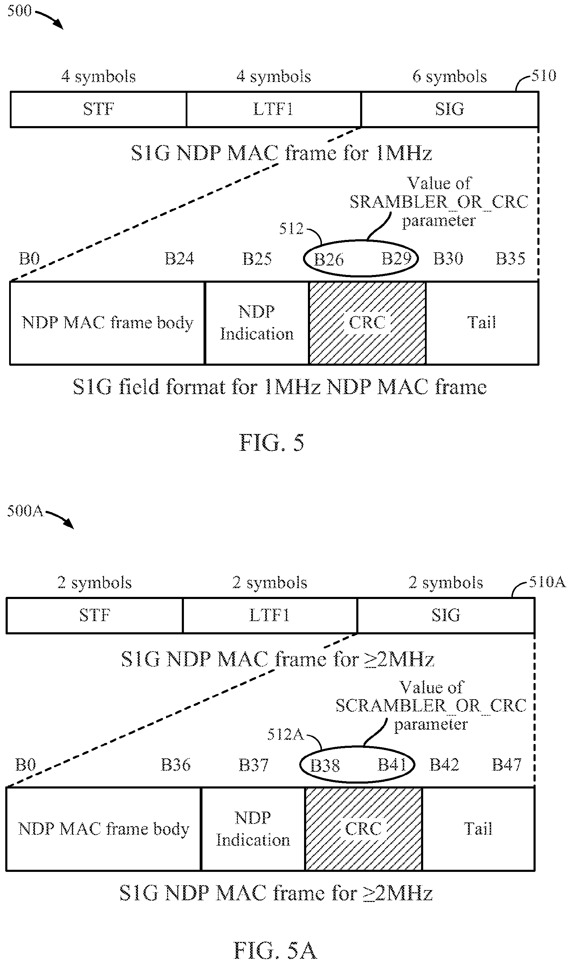

Referring to FIG. 5, for an NDP MAC frame the value of the SCRAMBLER_OR_CRC parameter may be the calculated CRC value in the signal SIG/SIGA field of the PHY header. While FIG. 5 illustrates a 1MHz NDP MAC frame, the parameter may be calculated in a similar manner for any frame generated (e.g., in an 802,11ah network). For the S1G NDP frame shown in FIG. 5, the CRC value may be conveyed in bits [B26:B29] of the SIG field. As illustrated in FIG. 5A, for another type of an NDP MAC frame (>=2 MHz), the CRC value may be conveyed in bits [B38:B41] of the SIGA field.

According to certain aspects, a receiver may receive an MAC Protocol Data Unit (MPDU) from a transmitter comprising scrambler, FCS, and/or CRC information. The receiver may then generate a response frame (e.g., NDP ACK, NDP BlockAck, STACK, NDP Modified ACK) based on the information (e.g., scrambler initialization information, FCS field information, and/or CRC information) contained in the received MPDU. For example, the receiver may send an NDP Modified ACK that includes an ACK identifier (ID) calculated based on the CRC value of the received NDP power save (PS)-Poll. The transmitter may receive the NDP Modified ACK and determine whether the MPDU it sent was received based on the ACK ID.

Aspects of the present disclosure provide mechanisms for signaling information generated at the transmitter's PHY entity (that performs processing at the PHY layer), to the MAC entity (that performs processing at the MAC layer) in order to determine the ACK ID.

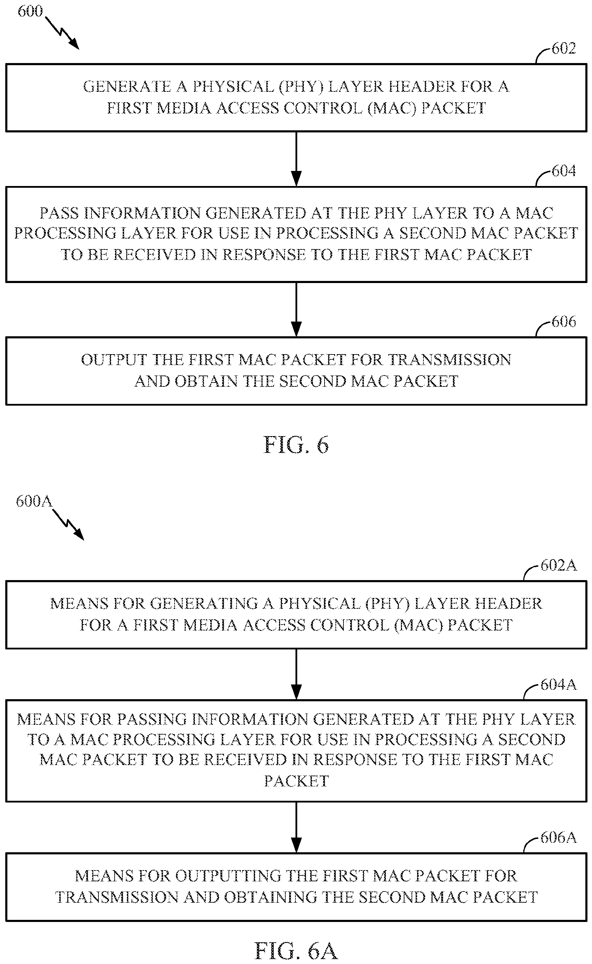

FIG. 6 is a block diagram of operations 600 for signaling between a PHY layer and a MAC layer, in accordance with aspects of the present disclosure. The operations 600 may be performed, for example, by a requesting apparatus sending a frame designed to elicit a response.

Operations 600 begin, at 602, by generating a physical layer (PHY) header for a first media access control (MAC) packet. At 604, the apparatus passes the information generated at the PHY layer (e.g., information corresponding to the first MAC packet) to a MAC layer for use in processing a second MAC packet to be received in response to the first MAC packet. At 606, the apparatus outputs the first MAC packet for transmission and obtains the second MAC packet.

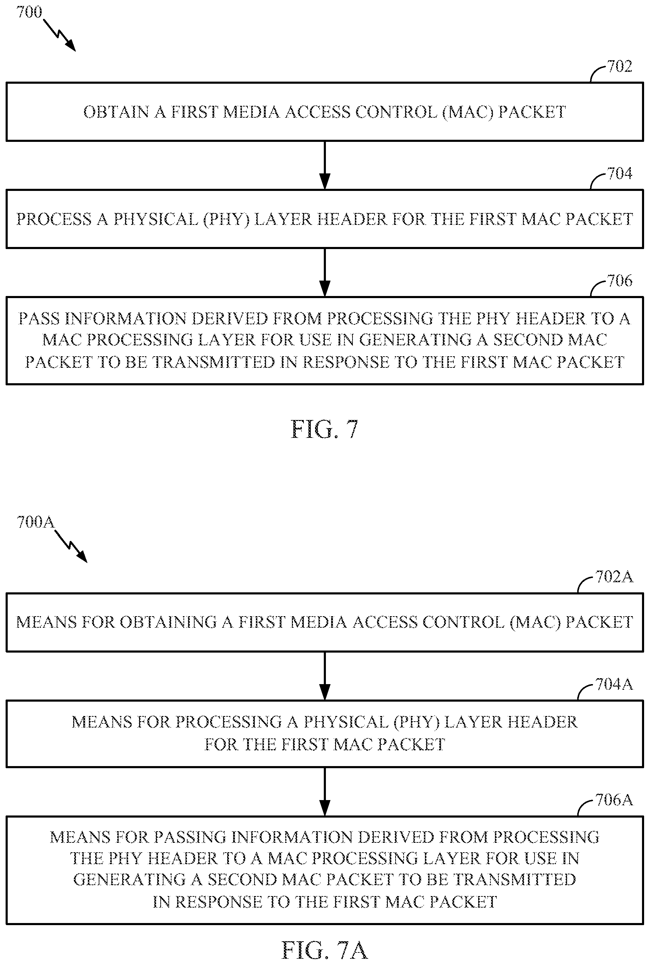

FIG. 7 is a block diagram of operations 700 for signaling between a PHY layer and a MAC layer, in accordance with aspects of the present disclosure. The operations 700 may be performed by a responding apparatus. In other words, operations 700 may be considered as complementary to operations 600.

Operations 700 begin, at 702 by obtaining a first media access control (MAC) packet. At 704, the apparatus processes a physical layer (PHY) header for the first MAC packet. At 706, the apparatus passes information from processing the PHY header to a MAC layer for use in generating a second MAC packet to be transmitted in response to the first MAC packet.

According to certain aspects, the information is passed to the MAC layer in a structure confirming transmission of the first MAC packet. As noted above, the information may comprise information used to generate a CRC value for the first MAC packet. According to certain aspects the CRC value is generated to protect the SIG/SIGA field of the PHY header of the frame carrying the MAC packet. As noted above, the MAC packet may be a null data packet (NDP), where the information is included in the SIG/SIGA field. As an example the packet can be an NDP PS-Poll frame.

According to certain aspects, the information may comprise information used to generate an FCS value for the first MAC packet. According to other aspects, the information may comprise information used to scramble one or more portions of the first MAC packet.

According to certain aspects, the type of the information passed to the MAC layer may depend on a type of the first MAC packet. For example, according to certain aspects, information used to generate a CRC value may be passed to the MAC layer, if the MAC packet is of a first type (as shown in FIGs. 4 and 4A) or information used to scramble one or more portions of the MAC packet may passed to the MAC layer, if the MAC packet is of a second type (as shown in FIGs. 5 and 5A). According to further aspects, the MAC layer may use the information to determine whether the second MAC packet is received responsive to the first MAC packet.

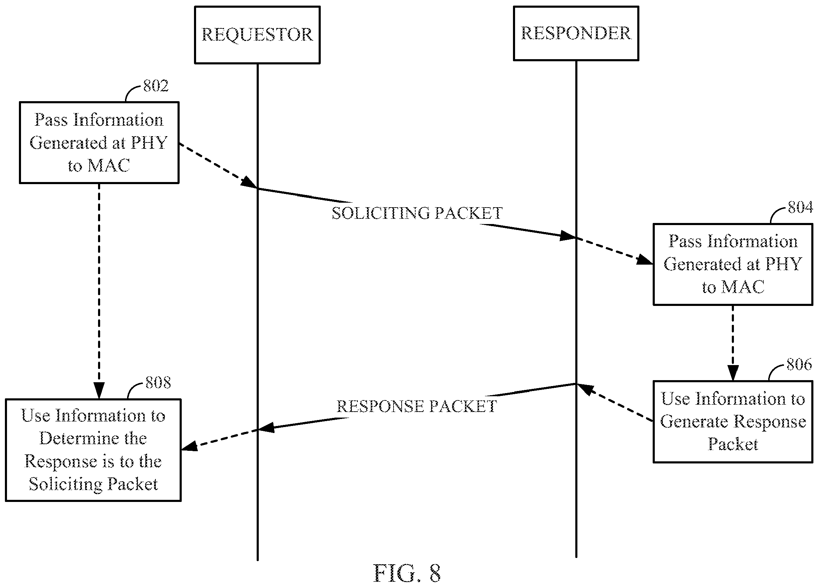

Fig. 8 illustrates an example how signaling between a PHY layer and a MAC layer is used at a requesting device (Requester) and a responding device (a Responder), operations 600 and 700 shown in FIGS. 6 and 7. As illustrated, at 802, the Requester may pass to a MAC layer, information generated at the PHY layer when generating a soliciting packet. At 804, the Responder may pass information generated at the PHY to the MAC layer. At 808, the MAC layer may use the information to generate a response packet. Upon receiving the response packet, at 808, the Requester may use the information (passed from the PHY to the MAC at 802) to determine the response is to the soliciting packet.

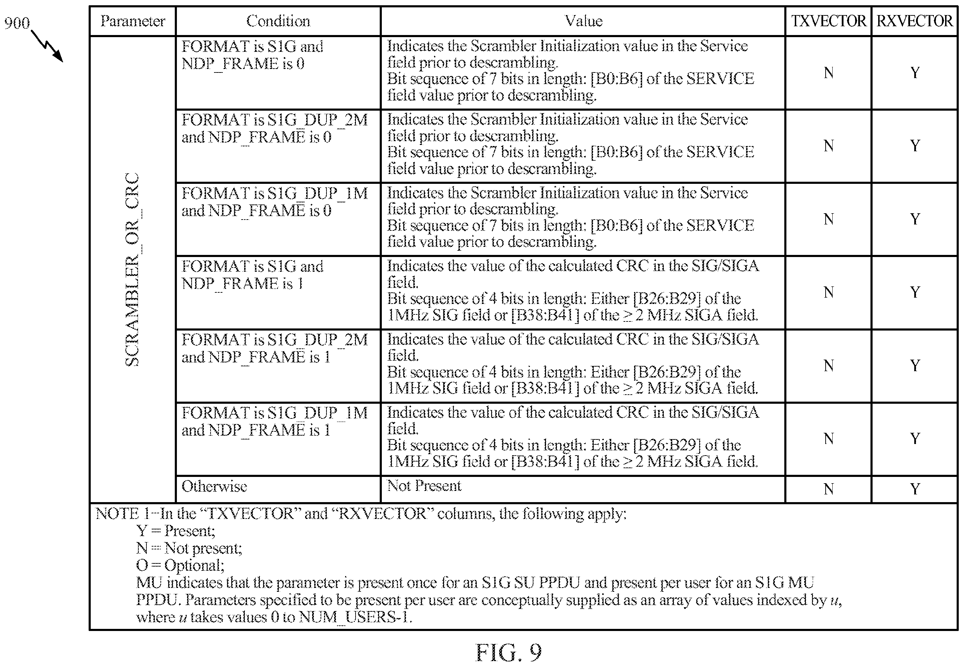

Table 900 shown in Fig. 9 illustrates various parameters that may be signaled in a RXVECTOR/TXVECTOR parameter, according to certain aspects of the present disclosure. Table 900 illustrates how the values and meanings of the parameter may differ depending on a type of frame. As illustrated, for non-NDP frames, the parameter may indicate the Scrambler Initialization value in the Service field prior to descrambling. For NIP frames, on the other hand, the parameter may indicate the value of the calculated CRC in the SIG/SIGA field.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 600 and 700 illustrated in FIGs. 6 and 7 correspond to means 600A and 700A illustrated in Figs. 6A and 7A.

For example, means for transmitting (or outputting) may comprise a transmitter (e.g., the transmitter unit 222) and/or an antenna(s) 224 of the access point 110 illustrated in FIG. 2 or the transmitter 310 and/or antenna(s) 316 depicted in FIG. 3. Means for receiving (or obtaining) may comprise a receiver (e.g., the receiver unit 222) and/or an antenna(s) 224 of the access point 110 illustrated in FIG. 2 or the receiver 312 and/or antenna(s) 316 depicted in FIG. 3.

Means for generating, means for determining, means for processing, and means for passing information may comprise a processing system, which may include one or more processors, such as the RX data processor 242, the TX data processor 210, and/or the controller 230 of the access point 110 illustrated in FIG. 2 or the processor 304 and/or the DSP 320 portrayed in FIG. 3.

According to certain aspects, such means may be implemented by processing systems configured to perform the corresponding functions by implementing various algorithms (e.g., in hardware or by executing software, instructions) described above.

As used herein, the term "determining" encompasses a wide variety of actions. For example, "determining" may include calculating, computing, processing, deriving, investigating, looking up (e.g., looking up in a table, a database or another data structure), ascertaining and the like. Furthermore, "determining" may include receiving (e.g., receiving information), accessing (e.g., accessing data in a memory) and the like. Also, "determining" may include resolving, selecting, choosing, establishing and the like.

As used herein, the term "outputting" may involve actual transmission or output of a structure (via an interface such as a bus) from one entity (e.g., a processing system) to another entity (e.g., an RF front end or modem) for transmission. Similarly, as used herein, the term "obtaining" may involve actual receiving of a structure transmitted over the air or obtaining the structure (via an interface such as a bus) by one entity (e.g., a processing system) from another entity (e.g., an RF front end or modem).

As used herein, a phrase referring to "at least one of a list of items refers to any combination of those items, including single members. As an example, "at least one of: *a*, *b*, or *c*" is intended to cover *a*, *b*, *c*, *a*-*b*, *a-c*, *b-c*, and *a-b-c*, as well as any combination with multiples of the same element (e.g., *a*-*a*, *a*-*a*-*a*, *a*-*a*-*b*, *a*-*a*-*c*, *a*-*b*-*b*, a-*c-c*, *b-b*, *b-b-b*, *b-b-c*, *c-c*, and *c-c-c* or any other ordering of *a*, *b*, and *c*).

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, Erasable Programmable Read Only Memory (EPROM), Electrically Erasable Programmable Read-Only Memory (EEPROM), registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROOM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer readable storage medium with instructions stored thereon separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROOM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method for wireless communications, comprising:
generating (602) a physical, PHY, layer header for a first media access control, MAC, packet;
passing (604) information generated at the PHY layer to a MAC layer for use in processing a second MAC packet to be received in response to the first MAC packet, wherein:
information used to generate a cyclic redundancy check, CRC, value is passed to the MAC layer, if the first MAC packet is of a first type; or
information used to scramble one or more portions of the MAC packet is passed to the MAC layer, if the first MAC packet is of a second type; and
outputting (606) the first MAC packet for transmission and obtaining the second MAC packet.

2. The method of claim 1, wherein the information is passed to the MAC layer in a structure confirming transmission of the first MAC packet.

3. The method of claim 1, wherein the information comprises information used to generate a cyclic redundancy check, CRC, value for a portion of the first MAC packet.

4. The method of claim 1, wherein the information comprises information used to generate a frame check sequence, FCS, value for the first MAC packet.

5. A method for wireless communications, comprising:
obtaining (702) a first media access control, MAC, packet;
processing (704) a physical, PHY, layer header of the first MAC packet; and
passing (706) information derived from processing the PHY header to a MAC layer for use in generating a second MAC packet to be transmitted in response to the first MAC packet,
wherein:
information used to generate a cyclic redundancy check, CRC, value is passed to the MAC layer, if the first MAC packet is of a first type; or
information used to scramble one or more portions of the MAC packet is passed to the MAC layer, if the first MAC packet is of a second type.

6. The method of claim 5, wherein the information is passed to the MAC layer in a structure confirming reception of the first MAC packet.

7. The method of claim 5, wherein the information comprises information used to generate a cyclic redundancy check, CRC, value for a portion of the first MAC packet.

8. The method of claim 5, wherein the information comprises information that was used to generate a frame check sequence, FCS, value for the first MAC packet.

9. A computer-program comprising instructions for performing a method according to any of the claims 1 to 8.

10. An apparatus for wireless communications, comprising:
means for generating (602A) a physical layer, PHY, header for a first media access control, MAC, packet;
means for passing (604A) information generated at the PHY layer to a MAC layer for use in processing a second MAC packet to be received in response to the first MAC packet, wherein:
information used to generate a cyclic redundancy check, CRC, value is passed to the MAC layer, if the first MAC packet is of a first type; or
information used to scramble one or more portions of the first MAC packet is passed to the MAC layer, if the first MAC packet is of a second type; and
means for outputting (606A) the first MAC packet for transmission and obtaining the second MAC packet.

11. The apparatus of claim 10, wherein the information is passed to the MAC layer in a structure confirming transmission of the first MAC packet.

12. The apparatus of claim 10, wherein the information comprises information used to generate a cyclic redundancy check, CRC, value for a portion of the first MAC packet.

13. An apparatus for wireless communications, comprising:
means for obtaining (702A) a first media access control, MAC, packet;
means for processing (704A) a physical, PHY, layer header of the first MAC packet; and means for passing (706A) information derived from processing the PHY header to a MAC layer for use in generating a second MAC packet to be transmitted in response to the first MAC packet, wherein:
information used to generate a cyclic redundancy check, CRC, value is passed to the MAC layer, if the first MAC packet is of a first type; or
information used to scramble one or more portions of the first MAC packet is passed to the MAC layer, if the first MAC packet is of a second type.

14. The apparatus of claim 13, wherein the information is passed to the MAC layer in a structure confirming reception of the first MAC packet.

15. The apparatus of claim 13, wherein the information comprises information used to generate a cyclic redundancy check, CRC, value for a portion of the first MAC packet.

## Patentansprüche

1. Verfahren für drahtlose Kommunikation, aufweisend:
Erzeugen (602) eines Physical, PHY, Layer Headers für ein erstes Media Access Control, MAC, Paket;
Weiterleiten (604) von Information, die in dem PHY-Layer erzeugt wurde, an einen MAC-Layer zur Verwendung beim Verarbeiten eines zweiten MAC-Pakets, das in Antwort auf das erste MAC-Paket zu empfangen ist, wobei:
Information, welche verwendet wird, um einen zyklischen Redundanzcheck-, CRC, Wert zu erzeugen, an den MAC-Layer weitergeleitet wird, wenn das erste MAC-Paket von einem ersten Typ ist; oder
Information, die verwendet wird, um einen oder mehrere Teile des MAC-Pakets zu zerhacken, an den MAC-Layer weitergeleitet wird, wenn das erste MAC-Paket von einem zweiten Typ ist; und
Ausgeben (606) des ersten MAC-Pakets zur Übertragung und Erhalten des zweiten MAC-Pakets.

2. Verfahren nach Anspruch 1, wobei die Information in einer Struktur an den MAC-Layer weitergeleitet wird, welche die Übertragung des ersten MAC-Pakets bestätigt.

3. Verfahren nach Anspruch 1, wobei die Information Information aufweist, die verwendet wird, um einen zyklischen Redundanzcheck-, CRC, Wert für einen Teil des ersten MAC-Pakets zu erzeugen.

4. Verfahren nach Anspruch 1, wobei die Information Information aufweist, die verwendet wird, um einen Frame Check Sequenz-, FCS, Wert für das erste MAC-Paket zu erzeugen.

5. Verfahren für drahtlose Kommunikation, aufweisend:
Erlangen (702) eines ersten Media Access Control, MAC, Pakets;
Verarbeiten (704) eines Physical, PHY, Layer Headers des ersten MAC-Pakets; und
Weiterleiten (706) von Information, welche abgeleitet wird von dem verarbeiten des PHY Headers, an einen MAC-Layer zur Verwendung beim Erzeugen eines zweiten MAC-Pakets, das in Antwort auf das erste MAC-Paket zu übertragen ist, wobei:
Information, die verwendet wird, um einen zyklischen Redundanzcheck-, CRC, Wert zu erzeugen, an den MAC-Layer weitergeleitet wird, wenn das erste MAC-Paket von einem ersten Typ ist; oder
Information, die verwendet wird, um einen oder mehrere Teile des MAC-Pakets zu zerhacken, an den MAC-Layer weitergeleitet wird, wenn das erste MAC-Paket von einem zweiten Typ ist.

6. Verfahren nach Anspruch 5, wobei die Information an den MAC-Layer in einer Struktur weitergeleitet wird, welche den Empfang des ersten MAC-Pakets bestätigt.

7. Verfahren nach Anspruch 5, wobei die Information Information aufweist, die verwendet wird, um einen zyklischen Redundanzcheck-, CRC, Wert für einen Teil des ersten MAC-Pakets zu erzeugen.

8. Verfahren nach Anspruch 5, wobei die Information Information aufweist, die verwendet wird, um einen Frame Check Sequenz-, FCS, Wert für das erste MAC-Paket zu erzeugen.

9. Computerprogramm aufweisend Instruktionen zum Durchführen eines Verfahrens nach einem beliebigen der Ansprüche 1-8.

10. Vorrichtung für drahtlose Kommunikation, aufweisend:
Mittel zum Erzeugen (602a) eines Physical Layer, PHY, Headers für ein erstes Media Access Control, MAC, Paket;
Mittel zum Weiterleiten (604a) von Information, welche in dem PHY Layer erzeugt wurde, an einen MAC-Layer zur Verwendung bei der Verarbeitung eines zweiten MAC-Pakets, welches in Antwort auf das erste MAC-Paket zu empfangen ist, wobei:
Information, die verwendet wird, um einen zyklischen Redundanzcheck-, CRC, Wert zu erzeugen, an den MAC-Layer weitergeleitet wird, wenn das erste MAC-Paket von einem ersten Typ ist; oder
Information, die verwendet wird, um eine oder mehrere Teile des ersten MAC-Pakets zu zerhacken, an den MAC-Layer weitergeleitet wird, wenn das erste MAC-Paket von einem zweiten Typ ist; und
Mittel zum Ausgeben (606a) des ersten MAC-Pakets zur Übertragung und zum Erlangen des zweiten MAC-Pakets.

11. Vorrichtung nach Anspruch 10, wobei die Information in einer Struktur an den MAC-Layer weitergeleitet wird, welche die Übertragung des ersten MAC-Pakets bestätigt.

12. Vorrichtung nach Anspruch 10, wobei die Information Information aufweist, die verwendet wird, um einen zyklischen Redundanzcheck-, CRC, Wert für einen Teil des ersten MAC-Pakets zu erzeugen.

13. Vorrichtung für drahtlose Kommunikation, aufweisend:
Mittel zum Erlangen (702a) eines ersten Media Access Control-, MAC, Pakets; Mittel zum Verarbeiten (704a) eines Physical, PHY, Layer Headers des ersten MAC-Pakets; und
Mittel zum Weiterleiten (706a) von Information, welche von dem verarbeiten des PHY-Headers abgeleitet wurden, an einen MAC-Layer zur Verwendung bei der Erzeugung eines zweiten MAC-Pakets, welches in Antwort auf das erste MAC-Paket zu übertragen ist, wobei:
Information, die verwendet wird, um einen zyklischen Redundanzcheck-, CRC, Wert zu erzeugen, an den MAC-Layer weitergeleitet wird, wenn das erste MAC-Paket von einem ersten Typ ist; oder
Information, die verwendet wird, um einen oder mehrere Teile des ersten MAC-Pakets zu zerhacken, an den MAC-Layer weitergeleitet wird, wenn das erste MAC-Paket von einem zweiten Typ ist.

14. Vorrichtung nach Anspruch 13, wobei die Information an den MAC-Layer in einer Struktur weitergeleitet wird, welche den Empfang des ersten MAC-Pakets bestätigt.

15. Vorrichtung nach Anspruch 13, wobei die Information Information aufweist, die verwendet wird, um einen zyklischen Redundanzcheck-, CRC, Wert für einen Teil des ersten MAC-Pakets zu erzeugen.

## Revendications

1. Un procédé de communication sans fil, comprenant :
la génération (602) d'un entête de couche physique, PHY, pour un premier paquet de contrôle d'accès au support, MAC ;
la transmission (604) d'une information générée au niveau de la couche PHY à une couche MAC pour être utilisée pour traiter un second paquet MAC qui doit être reçu en réponse au premier paquet MAC, où :
une information utilisée pour générer une valeur de contrôle de redondance cyclique, CRC, est transmise à la couche MAC, si le premier paquet MAC est d'un premier type ; ou
une information utilisée pour brouiller une ou plusieurs parties du paquet MAC est transmise à la couche MAC, si le premier paquet MAC est d'un second type ; et
la délivrance (606) du premier paquet MAC pour émission et obtention du second paquet MAC.

2. Le procédé de la revendication 1, dans lequel l'information est transmise à la couche MAC dans une structure confirmant l'émission du premier paquet MAC.

3. Le procédé de la revendication 1, dans lequel l'information comprend une information utilisée pour générer une valeur de contrôle de redondance cyclique, CRC, pour une partie du premier paquet MAC.

4. Le procédé de la revendication 1, dans lequel l'information comprend une information utilisée pour générer une valeur de séquence de contrôle de trame, SCS, pour le premier paquet MAC.

5. Un procédé de communication sans fil, comprenant :
l'obtention (702) d'un premier paquet de contrôle d'accès au support, MAC ;
le traitement (704) d'un entête de couche physique, PHY, du premier paquet MAC ; et
la transmission (706) d'une information dérivée du traitement de l'entête PHY à une couche MAC pour être utilisée pour générer un second paquet MAC à émettre en réponse au premier paquet MAC, où :
une information utilisée pour générer une valeur de contrôle de redondance cyclique, CRC, est transmise à la couche MAC, si le premier paquet MAC est d'un premier type ; ou
une information utilisée pour brouiller une ou plusieurs parties du paquet MAC est transmise à la couche MAC, si le premier paquet MAC est d'un second type.

6. Le procédé de la revendication 5, dans lequel l'information est transmise à la couche MAC dans une structure confirmant l'émission du premier paquet MAC.

7. Le procédé de la revendication 5, dans lequel l'information comprend une information utilisée pour générer une valeur de contrôle de redondance cyclique, CRC, pour une partie du premier paquet MAC.

8. Le procédé de la revendication 5, dans lequel l'information comprend une information utilisée pour générer une valeur de séquence de contrôle de trame, SCS, pour le premier paquet MAC.

9. Un programme informatique comprenant des instructions pour mettre en oeuvre un procédé selon l'une des revendications 1 à 8.

10. Un appareillage de communication sans fil, comprenant :
des moyens de génération (602A) d'un entête de couche physique, PHY, pour un premier paquet de contrôle d'accès au support, MAC ;
des moyens de transmission (604A) d'une information générée au niveau de la couche PHY à une couche MAC pour être utilisée pour traiter un second paquet MAC qui doit être reçu en réponse au premier paquet MAC, où :
une information utilisée pour générer une valeur de contrôle de redondance cyclique, CRC, est transmise à la couche MAC, si le premier paquet MAC est d'un premier type ; ou
une information utilisée pour brouiller une ou plusieurs parties du paquet MAC est transmise à la couche MAC, si le premier paquet MAC est d'un second type ; et
des moyens de délivrance (606A) du premier paquet MAC pour émission et obtention du second paquet MAC.

11. L'appareillage de la revendication 10, dans lequel l'information est transmise à la couche MAC dans une structure confirmant l'émission du premier paquet MAC.

12. L'appareillage de la revendication 10, dans lequel l'information comprend une information utilisée pour générer une valeur de contrôle de redondance cyclique, CRC, pour une partie du premier paquet MAC.

13. Un appareillage de communication sans fil, comprenant :
des moyens d'obtention (702A) d'un premier paquet de contrôle d'accès au support, MAC ;
des moyens de traitement (704A) d'un entête de couche physique, PHY, du premier paquet MAC ; et
des moyens de transmission (706A) d'une information dérivée du traitement de l'entête PHY à une couche MAC pour être utilisée pour générer un second paquet MAC à émettre en réponse au premier paquet MAC, où :
une information utilisée pour générer une valeur de contrôle de redondance cyclique, CRC, est transmise à la couche MAC, si le premier paquet MAC est d'un premier type ; ou
une information utilisée pour brouiller une ou plusieurs parties du paquet MAC est transmise à la couche MAC, si le premier paquet MAC est d'un second type.

14. L'appareillage de la revendication 13, dans lequel l'information est transmise à la couche MAC dans une structure confirmant l'émission du premier paquet MAC.

15. L'appareillage de la revendication 13, dans lequel l'information comprend une information utilisée pour générer une valeur de contrôle de redondance cyclique, CRC, pour une partie du premier paquet MAC.
